# EUROPÄISCHE PATENTSCHRIFT

(11) **EP 0 440 748 B1**
(45) Veröffentlichungstag und Bekanntmachung des Hinweises auf die Patenterteilung: **01.09.1993**
(21) Anmeldenummer: 89913151.0
(22) Anmeldetag: 18.10.1989
(51) Int. Cl.: F16H 61/02, F16H 61/06, F16H 61/12, F16H 59/54

(54) **ELEKTROHYDRAULISCHE STEUERUNG FÜR ANTRIEBSSYSTEME VON FAHRZEUGEN MIT AUTOMATISCHEM GANGWECHSEL**
ELECTRONIC-HYDRAULIC CONTROL DEVICE FOR TRANSMISSION SYSTEMS OF VEHICLES WITH AUTOMATIC GEAR CHANGE
DISPOSITIF DE COMMANDE ELECTRONICO-HYDRAULIQUE POUR SYSTEMES DE TRANSMISSION DE VEHICULES AUTOMOBILES A CHANGEMENT DE VITESSE AUTOMATIQUE

(30) Priorität: 26.10.1988 DE 3836444
(43) Veröffentlichungstag der Anmeldung: 14.08.1991
(73) Patentinhaber: ZF FRIEDRICHSHAFEN Aktiengesellschaft, 88038 Friedrichshafen (DE)
(72) Erfinder: GIERER, Georg, D-7993 Kressbronn (DE)
(86) Internationale Anmeldenummer: EP8901243
(87) Internationale Veröffentlichungsnummer: WO9004732

(56) Entgegenhaltungen:
- DE-A- 2 945 315
- DE-A- 3 729 627
- GB-A- 1 281 040
- US-A- 4 658 705

## Beschreibung

Die Erfindung bezieht sich auf eine elektronischhydraulische Steuereinrichtung eines automatisch schaltenden Kraftfahrzeuggetrieben mit zur Schaltung einzelner Gangstufen dienenden hydraulisch ein- und ausrückbaren Reibkupplungen bzw. -bremsen, deren Betätigungseinrichtungen jeweils ein Steuerventil zugeordnet ist, mit einem das Druckniveau in einem Hauptdrucksystem regelnden Hauptdruckventil und mit einem als Mikroprozessor ausgebildeten Steuergerät, mittels welchem in Abhängigkeit von Betriebsparametern des Kraftfahrzeuggetriebes und eines Antriebsmotors sowie einer Einrichtung zur Schalt- und/oder Fahrprogrammbeeinflussung die Betätigungseinrichtungen beherrschende elektrisch betätigte Magnetventile und Drucksteuerventile verstellbar sind.

Eine elektronisch-hydraulische Steuereinrichtung eines automatisch schaltenden Kraftfahrzeuggetriebes der vorgenannten Gattung ist aus der DE-PS 29 45 315 bekannt. Dieses Steuersystem weist zwei elektromagnetisch betätigte Drucksteuerventile auf, die den Druckaufbau und Druckabbau an den Betätigungseinrichtungen der Reibkupplungen bzw.-bremsen regeln, wobei die Drucksteuerventile im Hauptdrucksystem dem Hauptdruckventil nachgeordnet sind. Diese Druckregelventile sorgen für einen geregelten Druckaufbau oder Druckabbau in der Betätigungseinrichtung der jeweils ein- oder auszurückenden Reibkupplung bzw. -bremse. Zu diesem Zweck ist jeder Betätigungseinrichtung eine Ventileinheit zugeordnet, die aus einem elektromagnetisch betätigten Schaltventil und zwei vom Arbeitsdruck betätigten Umsteuerventilen besteht. Über die Umsteuerventile wird jeweils während des Einrück- bzw. Ausrückvorgangs über das entsprechende Drucksteuerventil der Betätigungseinrichtung Druckmittel zugeleitet bzw. aus der Betätigungseinrichtung abgeführt. Nach diesem Schaltvorgang mit geregeltem Druckauf- oder -abbau in den Betätigungseinrichtungen gelangen die Umsteuerventile in eine Stellung, in welcher sie unter Umgehung der Drucksteuerventile eine Verbindung zwischen der jeweiligen Betätigungseinrichtung und dem Hauptdrucksystem bzw. einem Tankanschluß herstellen. Da jeder Betätigungsreinrichtung eine entsprechende aus Schaltventil und Umsteuerventilen bestehende Ventileinheit zugeordnet ist, weist diese elektronisch-hydraulische Steuereinrichtung eines automatisch schaltenden Kraftfahrzeuggetriebes den Nachteil eines hohen Bauaufwandes auf.

Der Erfindung liegt daher die Aufgabe zugrunde, bei einer elektronisch-hydraulischen Steuereinrichtung eines automatisch schaltenden Kraftfahrzeuggetriebes den baulichen Aufwand für eine geregelte Druckbeaufschlagung und einen geregelten Druckabbau in den Betätigungseinrichtungen der Reibklupplungen bzw. -bremsen zu reduzieren.

Diese Aufgabe wird an einer elektronisch-hydraulischen Steuereinrichtung der eingangs genannten Gattung dadurch gelöst, daß die Drucksteuerventile in einem gegenüber dem Hauptdrucksystem druckreduzierten ersten Steuersystem angeordnet sind, über welches sie vorsteuernd auf die Steuerventile und das Hauptdruckventil wirken, und daß die Magnetventile in einem ebenfalls gegenüber dem Hauptdrucksystem druckreduzierten zweiten Steuersystem angeordnet sind, wobei die Magnetventile vorsteuernd auf Schaltventile, die den Druckmittelzulauf vom Hauptdrucksystem zu den Steuerventilen steuern, und ein Rückwärtsgansicherungsventil wirken. Sämtliche Schalvorgänge und die Einstellung des Druckniveaus im Hauptdrucksystem erfolgen somit geregelt. Abgesehen davon, daß jeder Betätigungseinrichtung ein Steuerventil zugeordnet ist, können die übrigen hydraulischen Bauelemente, wie Magnetventile und Schaltventile, Mehrfachfunktionen übernehmen.

Weitere vorteilhafte Ausgestattungen der Erfindung sind in den Ansprüchen 2 bis 11 beschrieben. Danach soll gemäß Anspruch 2 ein erstes einen Ablauf stromproportional aufsteuerndes Drucksteuerventil in einer Steuerleitung des ersten Steuersystems angeordnet sein, über welches das Hauptdruckventil an seiner federbelasteten Stirnseite-derart motormomentabhängig druckentlastbar ist, daß mittels des Hauptdruckventils für jeden Betriebszustand der erforderliche Systemdruck des Hauptdrucksystems einstellbar ist und während eines Anfahrvorganges des Kraftfahrzeuggetriebes (N-G) oder (N-R) in den Betätigungseinrichtungen der in den jeweiligen Gangstufen einzurückenden Reibkupplungen bzw. -bremsen ein geregelter Druckaufbau erfolgt. Das erste Drucksteuerventil übernimmt somit gleichzeitig die Funktion einer motormomentabhängigen Druckmodulation und einer Steuerung des Anfahrvorganges. Es kann somit auf ein separates Druckmodulationsventil und auf besondere Schaltventile für den Anfahrvorgang verzichtet werden.

Weiterhin sollen gemäß Anspruch 3 zumindest ein zweites und ein drittes Drucksteuerventil jeweils einen Ablauf einer mit ihnen verbundenen Vorsteuerleitung des ersten Steuersystems während eines Betätigungsvorgangs stromproportional zusteuern, wobei Kolbenschieber der Steuerventile an ihrer einer Feder gegenüberliegenden Stirnseite unter dem Druck der jeweiligen Vorsteuerleitung verschiebbar sind. Mit diesen auf die Steuerventile wirkenden Drucksteuerventilen ist es möglich, alle Schaltvorgänge geregelt durchzuführen. Die Ansteuerung der Drucksteuerventile erfolgt über das als Mikroprozessor ausgebildete Steuergerät, welches in Abhängigkeit vom Motormoment und der Motordrehzahlgradienten einen entsprechenden Strom an die jeweils betätigten Drucksteuerventile abgibt. Somit können über das Steuergerät erfaßte Regelabweichungen durch veränderte Regelgrößen an den Drucksteuerventilen die Steuerventile derart nachführen, daß stets gleichmäßige Schaltvorgänge erzielt werden.

Weiterhin sollen gemaß Anspruch 4 die Schaltventile in Vorsteuerleitungen angeordnet sein, über welche die jeweilige Vorsteuerleitung in einen drucklosen Zustand schaltbar ist. Durch diese über das entsprechende Magnetventil erzielte Schaltstellung der Schaltventile werden Gangstufen hydraulisch gegeneinander verriegelt, d. h., Steuerleitungen, die zu Steuerventilen führen, deren Betätigungseinrichtungen nicht druckbeaufschlagt werden sollen, sind durch die Schaltventile drucklos geschaltet.

Gemäß Anspruch 5 ist für eine elektronisch-hydraulische Steuereinrichtung mit zumindest einem Abschaltventil, das bei einem Wechsel der Gangstufen den Abbau des Betätigungsdruckes der auszurückenden Reibkupplung bzw. -bremse steuert, vorgesehen, daß das Abschaltventil, dessen Kolbenschieber an seiner einen Stirnfläche mit Betätigungsdruck der Betätigungseinrichtung der einzurückenden Reibungskupplung bzw. -bremse beaufschlagt wird, an seiner gegenüberliegenden Stirnseite derart aus einer Vorsteuerleitung mit einem über ein elektrisches Drucksteuerventil geregelten Steuerdruck beaufschlagbar ist, daß es geregelt in eine den Druckmittelabfluß aus der Betätigungseinrichtung der auszurückenden Reibkupplung bzw. -bremse überführbar ist. Während einer Überschneidungsschaltung wird mittels dieser Abschaltventile und der zu betätigenden Steuerventile geregelt ein bestimmter Lastübernahmepunkt eingehalten, in welchem bei Erreichen einer bestimmten Synchrondrehzahl das übertragene Drehmoment an einer Kupplung oder Bremse abnimmt und an der zugeschalteten Kupplung oder Bremse zunimmt.

Einer weiteren Ausgestaltung der Erfindung, die in Anspruch 6 aufgeführt ist, zufolge ist ein weiteres die Abschaltventile regelndes elektrisches Drucksteuerventil in Abhängigkeit von der Schmieröltemperatur im Kraftfahrzeuggetriebe über einen Temperatursensor regelbar. Auf diese Weise kann der durch Zähflüssigkeit des Getriebeöls bei Temperaturen von weniger als 0 °C auftretende Schaltruck vermieden werden.

Weiterhin ist gemäß Anspruch 7 vorgesehen, daß die Steuerventile entsprechend dem jeweils über die zugeordnete Reibkupplung bzw. -bremse zu Hbertragenden Drehmoment eine unterschiedliche vom Vorsteuerdruck beaufschlagbare Stirnfläche aufweise. Dabei kann gemäß Anspruch 8 die Steuercharakteristik eines Steuerventiles, das jeweils in unteren und oberen Gangstufen betätigbar ist, bezogen auf das an der jeweiligen Reibkupplung bzw. -bremse zu Hbertragende Drehmoment, veränderbar sein durch eine Beaufschlagung des Steuerventils in der oberen Gangstufe an dessen kreisförmiger Stirnfläche und in der unteren Gangstufe an der kreisförmigen Stirnfläche und einer kreisringförmigen Betätigungsfläche.

Gemäß Anspruch 9 soll innerhalb des ersten Steuersystems jedem Drucksteuerventil ein hydraulischer Federspeicherdämpfer zur Reduzierung der Druckschwingungen zugeordnet sein. Derartige Druckschwingungen können je nach Bauart des Drucksteuerventils während des Auf- oder Zusteuerns von dessen Ventilkörper auftreten und zu nicht erwünschten Schaltstellungen der Steuerventile und Abschaltventile führen.

Die erfindungsgemäße elektronisch-hydraulische Steuereinrichtung weist gemäß Anspruch 10 zur Schaffung eines Sicherheitszustandes Schaltventile und Steuerventile auf, die allein durch Federkraft in die einer hohen Gangstufe entsprechende Stellung verschoben werden. Mit einer derartigen Sicherheitseinrichtung soll verhindert werden, daß beim Ausfall der Steuereinrichtung durch Rückschaltung des Kraftfahrzeuggetriebes in eine untere Gangstufe ein unerwünscht hohes Motorbremsmoment auftritt.

Schließlich ist gemäß Anspruch 11 vorgesehen, daß an das Steuergerät eine Einrichtung zur Fehlerüberwachung eines Zünd- bzw. Einspritzsystems des Antriebsmotors und/oder eine Einrichtung zur Überwachung eines Antiblockiersystems des Kraftfahrzeugs angeschlossen sind, die dem Steuergerät Fehler im Zünd- bzw. Einspritzsystem und/oder einen Betrieb des Antiblockiersystems signalisieren, wobei beim Auftreten des Fehlersignals und der weiteren Parameter Fahrzeuggeschwindigkeit v = 0 oder v = kleiner als ein unterer Grenzwert und/oder des Signals des Antiblockiersystems zumindest ein Rückwärtsgangsicherungsventil mittels seines zugeordneten Magnetventils oder Drucksteuerventils derart verstellt, daß sich das Kraftfahrzeuggetriebe zumindest phasenweise im Leerlauf befindet. Die Überwachung des Zünd- bzw. Einspritzsystems und Verstellung des Kraftfahrzeuggetriebes in seinen Leerlauf soll verhindern, daß bei selbsttätigem Drehzahlanstieg des Antriebsmotors, der aufgrund eines Defekts in der Motorelektrik auftreten kann, das Kraftfahrzeuggetriebe unbeabsichtigt anfährt und in die weiteren Gangstufen schaltet. Eine Schaltung des Kraftfahrzeuggetriebes in den Leerlauf während des Betriebes des Antiblockiersystems hat den Vorteil, daß an den Fahrzeugrädern kein Antriebsmoment zur Verfügung steht, wodurch das Bremsverhalten des Kraftfahrzeugs erheblich verbessert wird.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen sowie Ausgestaltungsbeispielen der Erfindung aus der Aufgabenstellung.

Zur weiteren Erläuterung der Erfindung wird auf die Zeichnung verwiesen, in der zwei Ausführungsbeispiele vereinfacht dargestellt sind. Es zeigen
- Fig. 1: eine schematische Darstellung eines Kraftfahrzeuggetriebes, das mittels einer erfindungsgemäß ausgebildeten Steuereinrichtung schaltbar ist,
- Fig. 2: eine Tabelle der in den einzelnen Gängen betätigten Reibkupplungen und -bremsen,
- Fig. 3: ein vereinfacht dargestelltes Steuerschema der erfindungsgemäßen Steuereinrichtung,
- Fig. 4: ein im wesentlichen mit der Anordnung nach Fig. 3 übereinstimmendes Steuerschema, bei dem ein zusätzliches, in Abhängigkeit von der Temperatur des Getriebeöls betätigtes Drucksteuerventil vorgesehen ist, und
- Fig. 5: eine Tabelle der in den einzelnen Gangstufen betätigten Magnetventile und Drucksteuerventile.

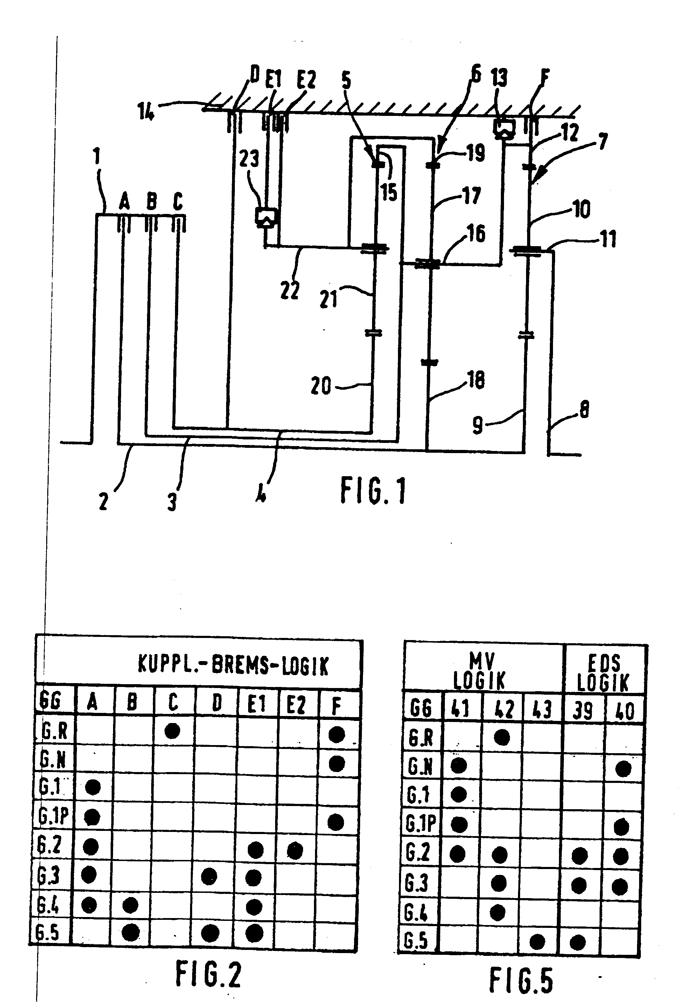

In der Fig. 1 ist mit 1 eine Eingangswelle bezeichnet, die vom Antriebemotor des Kraftfahrzeugs über einen nicht dargestellten hydrodynamischen Drehmomentwandler angetrieben wird und über Kupplungen A, B, C wahlweise mit Antriebswellen 2, 3 und 4 reibschlüssig verbindbar ist. Das Kraftfahrzeuggetriebe weist weiterhin Planetensätze 5, 6 und 7 sowie eine Ausgangswelle 8 auf. Die Antriebswelle 2, die über die Kupplung A mit der Eingangswelle reibschlüssig verbindbar ist, nimmt ein Sonnenrad 9 des dritten Planetensatzes 7 auf. Planetenräder 10, die mit diesem Sonnenrad 9 kämmen, sind auf einem Steg 11 angeordnet, welcher drehfest mit der Ausgangswelle 8 verbunden ist. Außerdem gehört zu diesem Planetensatz 7 ein Hohlrad 12, das über eine Reibbremse F oder eine Freilaufkupplung 13 an einem Getriebegehäuse 14 festlegbar ist. Die Antriebswelle 3, die über die Reibkupplung B an die Eingangswelle 1 kuppelbar ist, ist zum einen verbunden mit einem äußeren Zentralrad 15 des Planetensatzes 5, einem Planetenträger 16 des Planetensatzes 6 sowie dem Hohlrad 12 des Planetensatzes 7. Der Planetenträger 16 nimmt Planetenräder 17 auf, die einerseits im Eingriff sind mit einem auf der Antriebswelle 2 drehfest angeordneten inneren Zentralrad 18 und andererseits mit einem Hohlrad 19. Die über die Reibkupplung C trieblich mit der Eingangswelle verbindbare Antriebswelle 4 kann über eine Reibbremse D am Getriebegehäuse 14 festgelegt werden und not weiterhin ein Sonnenrad 20 des Planetensatzes 5 auf. Dieses Sonnenrad 20 kämmt mit Planetenrädern 21, die auf einer Stegwelle 22 angeordnet sind. Über eine Freilaufkupplung 23 und eine Reibkupplung E1 kann die Stegwelle 22 am Getriebegehäuse 14 festgebremst werden. Parallel zur Freilaufkupplung 23 und der Reibkupplung E1 ist zwischen der Stegwelle 22 und dem Getriebegehäuse 14 eine weitere Reibbremse E2 angeordnet. Darüber hinaus ist die Stegwelle 22 mit dem Hohlrad 19 des Planetensatzes 6 verbunden.

Zur Erläuterung des innerhalb der einzelnen Gangstufen erfolgenden Kraftflusses wird auf die Fig. 2 verwiesen, in der den einzelnen Gangstufen innerhalb einer Tabelle die jeweils betätigten Reibkupplungen bzw. -bremsen zugeordnet sind. In einer ersten Gangstufe, in der das Bremsmoment eines das Kraftfahrzeuggetriebe antreibenden Antriebsmotors nicht ausgenutzt werden soll, ist nur die Reibkupplung A eingerückt. Dabei ist am Leistungsfluß nur der Planetensatz 7 beteiligt. Die Antriebsleistung fließt von der Eingangswelle 1 über die Reibkupplung A, die Antriebswelle 2, das Sonnenrad 9 und die Planetenräder 10 direkt zum Steg 11, der mit der Ausgangswelle 8 verbunden ist. Da sich das Hohlrad 12 über die Freilaufkupplung 13 am Getriebegehäuse 14 abstützt, weist das Kraftfahrzeuggetriebe in dieser ersten Gangstufe eine Freilaufwirkung auf.

Darüber hinaus ist eine erste Gangstufe schaltbar, bei der das Bremsmoment des Antriebsmotors ausgenutzt werden kann. In diesem Fall wird die der Freilaufkupplung 13 parallelgeschaltete Reibbremse F betätigt. Diese Gangstufe trägt in der Tabelle die Bezeichnung 1P.

In einer zweiten Gangstufe des Kraftfahrzeuggetriebes ist ebenfalls die Reibkupplung A eingerückt, und es werden außerdem die Reibbremsen E1 und E2 betätigt, wobei die Reibbremse E1 eine Vorwahlstellung für den nachfolgenden dritten Gang einnimmt. Die Übersetzung und der Leistungsfluß werden dabei von den Planetensätzen 6 und 7 bestimmt. Ein Teil der Antriebswellenleistung fließt über das innere Zentralrad 18 und die Planetenräder 17 zum Planetenträger 16. Der andere Leistungsteil nimmt seinen Weg über das Sonnenrad 9 und die Planetenräder 10 und vereinigt sich im Steg 11 mit dem ersten Leistungszweig.

In der dritten Gangstufe,sind neben der eingerückten Reibkupplung A die Reibbremsen D und E1 betätigt. An der Bildung dieser Gangstufe sind daher alle drei Planetensätze 5, 6 und 7 beteiligt. Durch die Krafteinleitung am Sonnenrad 9 und am inneren Zentralrad 18 und die Abstützung am Sonnenrad 20 fließt die Leistung zur Ausgangswelle 8.

In der Gangstufe 4 sind neben der weiterhin betätigten Reibkupplung A die Reibkupplung B und die zwischen Freilaufkupplung 23 und Getriebegehäuse 14 angeordnete Reibkupplung E1 geschaltet. Die Reibkupplung E1 nimmt dabei eine Vorwahlstellung für den nachfolgenden fünften Gang ein. Die Leistung fließt verzweigt über die beiden Reibkupplungen A und B zum Sonnenrad 9 und zum Hohlrad 12 des Planetensatzes 7, an dessen Steg 11 sich die Leistungszweige wieder vereinigen.

Der fünfte Gang wird durch Betätigung der Reibkupplung B sowie der Reibbremsen D und E1 geschaltet. In den Kraftfluß sind wiederum alle drei Planetensätze 5, 6 und 7 einbezogen. Dabei treibt die Antriebswelle 3 zum einen über den Planetenträger 16 in den Planetensatz 6 und weiterhin über das Hohlrad 12 in den Planetensatz 7 ein, zum anderen treibt die Antriebswelle 3 über das äußere Zentralrad 15 in den Planetensatz 5 ein, dessen Sonnenrad 20 sich über die Reibbremse D abstützt.

In der Rückwärtsgangstufe ist die Reibkupplung C eingerückt und das Hohlrad 12 des Planetensatzes 7 ist am Getriebegehäuse 14 festgebremst.
Aufgrund dieser Einleitung der Antriebsleistung und der Abstützung am Planetensatz 7 kommt es zu einer negativen Leistungsverzweigung mit einer geänderten Drehrichtung am Steg 11 und somit an der Ausgangswelle 8.

In einer Neutralstellung des Kraftfahrzeuggetriebes, in der keine Antriebsleistung übertragen wird, ist nur die Reibbremse F betätigt.

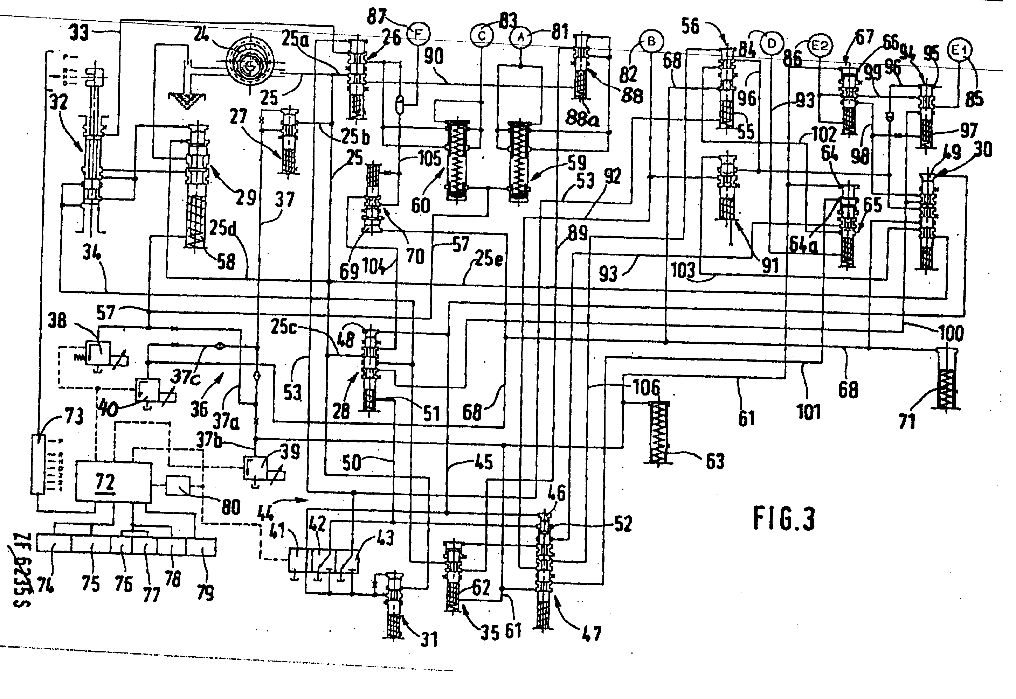

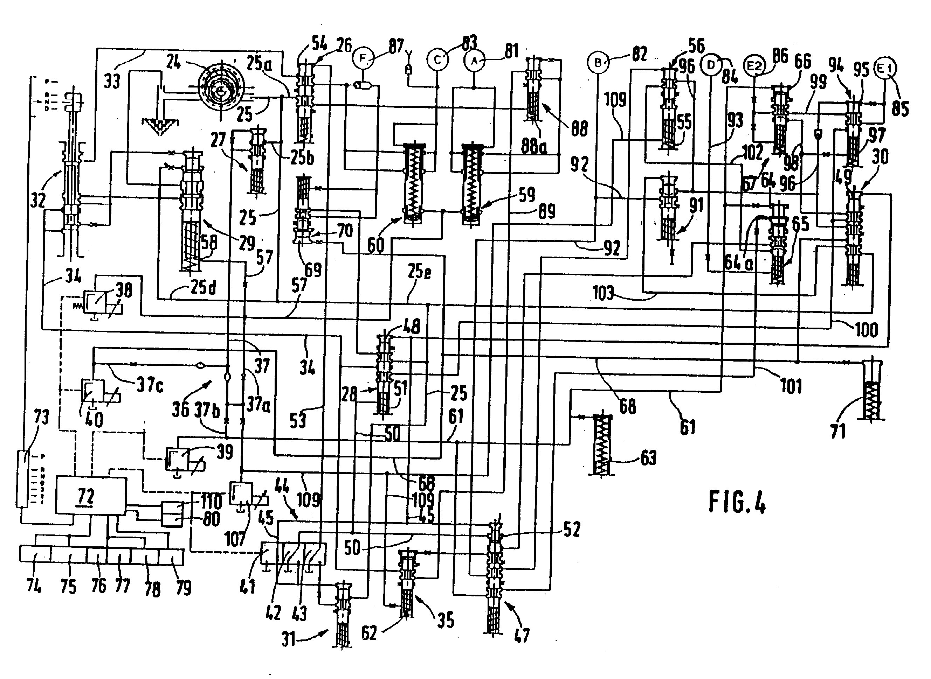

In den Fig. 3 und 4, die das Steuerschema eines elektro-hydraulischen Steuersystems zur Schaltung des in Fig. 1 erläuterten Getriebes darstellen, ist mit 24 eine Hydraulikpumpe bezeichnet, die in einem Hauptdrucksystem Druckmittel über eine Hauptleitung 25 und davon abzweigende Leitungszweige 25a zu einem Rückwärtsgangsicherungsventil 26, 25b zu einem ersten Druckreduzierventil 27, 25c zu einem Schaltventil 28 (nur in Fig. 3), 25d zu einem Hauptdruckventil 29, 25e zu einem Schaltventil 30 leitet und schließlich an ein Druckreduzierventil 31 angeschlossen ist. Über den Leitungszweig 25d des Hauptdrucksystems wird der Systemdruck mittels des Hauptdruckventils 29 geregelt, wobei Druckmittel aus diesem Leitungszweig drucklos abgeleitet werden kann. Der Leitungszweig 25d ist weiterhin an einen Wählschieber 32 angeschlossen, der aus dem Leitungszweig 25d in einer Stellung R Druckmittel über eine Leitung 33 zum Rückwärtsgangsicherungsventil 26 und in einer Stellung D, die seiner Stellung für die Vorwärtsgänge 1 bis 5 entspricht, Druckmittel in eine Leitung 34 führt. Diese Leitung 34 ist angeschlossen an das Schaltventil 28 und ein Abschaltventil 35.

Das Druckreduzierventil 27 stellt einen Steuerdruck eines ersten Steuersystems 36 ein. Dabei weist das erste Steuersystem 36 zunächst eine Hauptsteuerleitung 37 auf, von der aus ein gedrosselter Steuerzweig 37a zu einem ersten elektrischen Drucksteuerventil 38 führt. Weiterhin zweigt von der Hauptsteuerleitung 37 ein Steuerzweig 37b ab, der ebenfalls gedrosselt zu einem zweiten elektrischen Drucksteuerventil 39 führt. Schließlich ist die Hauptsteuerleitung 37 noch über einen Steuerzweig 37c mit einem dritten elektrischen Drucksteuerventil 40 gedrosselt verbunden.

An das Druckreduzierventil 31 sind Magnetventile 41, 42 und 43, die ein zweites Steuersystem 44 beherrschen, angeschlossen. Diese Magnetventile 41, 42 und 43 sind von ihrer Funktion her 3/2-Wegeventile, die über nicht näher bezeichnete Elektromagneten einzeln betätigbar sind. Von dem ersten Magnetventil 41 führt eine Steuerleitung 45 zu einem stirnseitigen Vorsteuerraum 46 eines Schaltventils 47, zum Vorsteuerraum 48 des Schaltventile 28 und zu einem Vorsteuerraum 49 des Schaltventils 30. Das zweite Magnetventil 42 stellt den Vorsteuerdruck in einer Steuerleitung 50 ein. Diese Leitung 50 wirkt vorsteuernd auf eine federbelastete Stirnseite 51 des Schaltventils 28 und auf einen ringförmigen Vorsteuerraum 52 des Schaltventils 47.

Schließlich ist das Magnetventil 43 über eine Steuerleitung 53 an einen stirnseitigen Vorsteuerraum 54 des Rückwärtsgangsicherheitsventils 26 und an einen federbelasteten Steuerraum 55 eines Abschaltventils 56 (nur in Fig. 3) angeschlossen.

In dem Steuerzweig 37a des ersten Steuersystems 36 wird an einer Vorsteuerleitung 57 das Druckniveau über das elektrische Drucksteuerventil 38, das stromproportional einen belauf zum Tank aufsteuert, eingestellt. Diese Vorsteuerleitung 57 führt zu einer federbelasteten Stirnseite 58 des Hauptdruckventils 29. Andererseits ist die Vorsteuerleitung 57 angeschlossen an Federspeicherdämpfern 59 und 60, die jeweils den Reibkupplungen A und C zugeordnet sind.

Von einem gedrosselten und über das Drucksteuerventil 39 steuerbaren Abschnitt des Steuerzweigs 37b ist im ersten Steuersystem 36 eine Vorsteuerleitung 61 vorgesehen, die angeschlossen ist an einen stirnseitigen Federraum des Abschaltventils 35 (nur in Fig. 3), an das Schaltventil 47, an einen Federspeicherdämpfer 63, an einen Vorsteuerraum 64 sowie eine ringförmige Kolbenfläche 64a eines Steuerventils 65, das der Reibkupplung B zugeordnet ist, und an einen stirnseitigen Steuerraum 66 eines Steuerventils 67, das der Reibbremse E2 zugeordnet ist.

Das dritte Drucksteuerventil 40 beherrscht den Druck in einer Vorsteuerleitung 68. Die Vorsteuerleitung 68 ist verbunden mit einem Vorsteuerraum 69 eines andererseits federbelasteten Steuerventils 70, das die Betätigung der Reibbremse F beherrscht, mit einem gesteuerten Anschluß des Abschaltventils 56 (nur in Fig. 3), mit einem gesteuerten Anschluß des Schaltventils 30 und mit einem Federspeicherdämpfer 71.

Die Steuereinrichtung weist weiterhin ein als Mikroprozessor ausgebildetes Steuergerät 72 auf, dem über eine Schaltprogrammbeeinflussung 73 vom Fahrer des Kraftfahrzeugs bestimmte last- und drehzahlabhängige Schaltstrategien zugeführt werden können. Weiterhin sind Meßwertaufnehmer für folgende Betriebsparameter des nicht dargestellten Antriebsmotors an das Steuergerät angeschlossen:
Ein Motormomentsensor 74, ein Drosselklappensensor 75 sowie Drehzahlsensoren 76 und 77 für die Drehzahl des Antriebsmotors und Abtriebsdrehzahl des Kraftfahrzeuggetriebes sowie Drehzahl einer nicht dargestellten Turbine des hydrodynamischen Drehmomentwandlers. Schließlich sind an das Steuergerät 72 noch Geberelemente angeschlossen, von denen das eine als Fahrprogrammbeeinflussung 78 und das andere als Fehlerdetektor 79 ausgebildet ist, der Fehler im Zünd- bzw. Einspritzsystem des Antriebsmotors ermittelt. Außerdem ist an das Steuergerät 72 eine Überwachungseinrichtung 80 angeschlossen, die dem Steuergerät 72 Betriebssignale eines nicht dargestellten Antiblockiersystems übermittelt.

Das Steuergerät beherrscht aufgrund dieser Eingabedaten und Betriebsparameter die Funktionen der Drucksteuerventile 38, 39 und 40 sowie der Magnetventile 41, 42 und 43, wobei diesen Ventilen von dem Steuergerät 72 ein bestimmter Steuerstrom zugeführt wird. Jeder der Reibkupplungen und -bremsen ist eine Betätigungseinrichtung zugeordnet, die als nicht näher dargestellter hydraulischer Stellantrieb ausgebildet sein wird. In der Zeichnung sind die Betätigungseinrichtungen nur symbolisch als Kreis dargestellt, in welchem jeweils die betätigbare Reibkupplung bzw. -bremse angegeben ist. Dabei ergibt sich folgende Zuordnung der Betätigungseinrichtungen zu den Reibkupplungen bzw. -bremsen:
Betätigungseinrichtung 81 für Reibkupplung A
Betätigungseinrichtung 82 für Reibkupplung B
Betätigungseinrichtung 83 für Reibkupplung C
Betätigungseinrichtung 84 für Reibbremse D
Betätigungseinrichtung 85 für Reibbremse E1
Betätigungseinrichtung 86 für Reibbremse E2
Betätigungseinrichtung 87 für Reibbremse F.

Es wurden bereits Steuerventile 67 und 70 aufgeführt, die die Betätigungseinrichtungen 86 und 87 beherrschen. Weiterhin ist ein Steuerventil 88 vorgesehen, das über eine Systemdruckleitung 89 vom Abschaltventil 35 aus mit Druckmittel beaufschlagbar ist. Dieses Steuerventil 88 wird andererseits an einer federbelasteten Stirnseite vom Rückwärtsgangsicherungsventil 26 aus mit Systemdruck beaufschlagt. Weiterhin ist der Betätigungseinrichtung 82 der Reibkupplung B ein Steuerventil 91 zugeordnet.

Das Steuerventil 91 steht über eine Leitung 92 mit der Betätigungseinrichtung 82 und mit einem gesteuerten Anschluß des Schaltventils 47 in Verbindung. Die Betätigungseinrichtung 84 der Reibbremse D ist über eine Leitung 93 mit dem Steuerventil 65 und dem Schaltventil 47 verbunden. Der Betätigungseinrichtung 85 ist ein Steuerventil 94 zugeordnet, das an einen stirnseitigen Vorsteuerraum 95 angeschlossen ist an eine mit dem Schaltventil 30, dem Steuerventil 91 und dem Abschaltventil 55 verbundene Leitung 96. Ein diesem Vorsteuerraum 95 gegenüberliegender Federraum 97 des Steuerventils 94 steht über eine Leitung 98 mit dem Steuerventil 67 und dem Schaltventil 30 in Verbindung. Schließlich führen noch Leitungen 99 und 100 vom Steuerventil 94 zum Steuerventil 67 und vom Steuerventil 94 zu den Schaltventilen 30 und 28. Das der Reibungsbremse D zugeordnete Steuerventil 65 ist über Leitungen 101 und 102 mit dem Schaltventil 47 und dem Abschaltventil 56 verbunden. Ferner besteht über eine Leitung 103 eine Verbindung zwischen dem Schaltventil 30 und dem Steuerventil 91.

Zur Erläuterung der Funktionsweise des erfindungsgemäßen Steuersystems, die anhand der Fig. 3 erfolgt, sei außerdem auf die Fig. 5 verwiesen, in der die Schaltlogik der Magnetventile und Drucksteuerventile in bezug zu den einzelnen Gangstufen gesetzt ist.

In einer Stufe N des Fahrzeuggetriebes, in der sich das Fahrzeuggetriebe in seiner Neutralstellung befindet, nehmen sämtliche Ventile die in der Fig. 3 dargestellte Stellung ein. Das Magnetventil 41 und das Drucksteuerventil 40 sind betätigt, so daß ein Druckaufbau in der Vorsteuerleitung 68 des ersten Steuersystems 36 und in der Steuerleitung 45 des zweiten Steuersystems 44 erfolgt. Durch den Druck in der Steuerleitung 45 wird das Schaltventil 28 in eine Stellung verschoben, in der es die Leitung 104 mit der Hauptleitung 25 verbindet. Betätigt durch das Drucksteuerventil 40 befindet sich das Steuerventil 70 in einer Stellung, in der es die Leitungen 104 und 105 miteinander verbindet. Somit wird der Betätigungseinrichtung 87 der Reibkupplung F Druckmittel aus dem Hauptdrucksystem zugeführt.

Wird der Wählschieber 32 aus seiner Stellung N in die Stellung D verlagert, so gelangt nunmehr Druckmittel aus dem Leitungszweig 25d, dessen Druck über das Hauptdruckventil 29 geregelt wird, in die Leitung 34. Beim Übergang von N nach D wird über das Steuergerät 72 das Drucksteuerventil 38 aufgesteuert, so daß der Druck an der federbelasteten Stirnseite 58 des Hauptdruckventils 29 reduziert wird. Von der systemdruckführenden Leitung 34 gelangt das Druckmittel über das Abschaltventil 35 in die Systemdruckleitung 89, von der aus es der Betätigungseinrichtung 81 der Reibkupplung A zugeführt wird. Der Druckaufbau in der Betätigungseinrichtung erfolgt dabei geregelt über das auf das Hauptdruckventil 29 und die beiden Federspeicherdämpfer 59 und 60 wirkende Drucksteuerventil 38. Das Kraftfahrzeuggetriebe befindet sich nach erfolgter Schaltung in einer ersten Gangstufe, in der die Freilaufkupplung 13 und die Reibkupplung A wirksam sind.

In einer Gangstufe 1P sind das Magnetventil 41 und das Drucksteuerventil 40 betätigt. In dieser Gangstufe kann, beispielsweise beim Befahren von Gefällstrecken, im ersten Gang das Motorbremsmoment ausgenutzt werden. Zu diesem Zweck muß unter Beibeihaltung des Eingriffs der Reibkupplung A die der Freilaufkupplung 13 parallelgeschaltete Reibbremse F betätigt werden. Die Aktivierung des Drucksteuerventils 40 führt zu einem Druckanstieg in der Vorsteuerleitung 68, wodurch das Steuerventil 70 in eine Stellung verschoben wird, in der es aus der Hauptleitung 25 und dem geöffneten Schaltventil 28 sowie Leitungen 104 und 105 die Betätigungseinrichtung 87 der Reibbremse F versorgt.

In einer zweiten Gangstufe sind die Magnetventile 41 und 42 sowie die Drucksteuerventile 39 und 40 betätigt. Da an der federbelasteten Stirnseite 51 des Schaltventils 28 ein Druckaufbau über das zweite Steuersystem 44 mittels Magnetventil 42 und Steuerleitung 50 erfolgt, wird die Betätigungseinrichtung 87 der Reibbremse F entleert, wodurch die Reibbremse F ausgerückt wird. Die Reibkupplung A bleibt eingerückt, während die Betätigungseinrichtungen 85 und 86 der Reibbremsen E1 und E2 auf folgende Weise betätigt sind: Über die Leitung 100, die mittels des Schaltventils 28 aus der Leitung 34 mit Systemdruck versorgt wird, gelangt das Druckmittel über das Schaltventil 30 in die Leitung 98. Das Steuerventil 67 ist durch Belastung seines stirnseitigen Steuerraums mit Vorsteuerdruck des Drucksteuerventils 39 in seine untere Stellung verschoben, so daß Druckmittel aus der Leitung 98 zu der Betätigungseinrichtung 86 und über die Leitung 99 sowie das Steuerventil 94 zur Betätigungseinrichtung 85 gelangen kann und dabei die beiden Reibbremsen E1 und E2 einrückt.

Beim Hochschalten von der zweiten in die dritte Gangstufe wird das Magnetventil 41 abgeschaltet, während das Magnetventil 42 und die Drucksteuerventile 39 und 40 weiterhin aktiviert sind. Die Folge davon ist, daß über das Schaltventil 30 die Beaufschlagung der beiden Betätigungseinrichtungen 85 und 86 drucklos geschattet wird, da über das geöffnete Magnetventil 41 der Druck im Vorsteuerraum 49 des Schaltventils 30 abgebaut wird. Es wird darüber hinaus aber für die Reibbremse E1 von der Leitung 100 aus Druckmittel zugeführt. Die Beaufschlagung der Betätigungseinrichtung 84 der Reibbremse D erfolgt von der Leitung 100 aus über Leitung 96, das Abschaltventil 56, Leitung 102, das Steuerventil 65 und Leitung 93. Die Ventile 65 und 56 nehmen bereits in der Einschaltstellung der zweiten Gangstufe diese Stellung ein, wobei die Umschaltung alleine durch das Abschalten des Magnetventils 41 herbeigeführt wird, durch das das Schaltventil 30 in seine durch Federkraft verstellte N-Stellung gelangt. Unter Berücksichtigung des von der Reibbremse D zu Übertragenden Bremsmoments wirkt bei diesem Gangwechsel eine verstärkte Betätigungskraft auf das Steuervenitl 65. Dabei werden aus der Vorsteuerleitung 61 sowohl der Vorsteuerraum 64 als auch die ringförmige Kolbenfläche 64a druckbeaufschlagt.

Zur Überführung des Kraftfahrzeuggetriebes aus seiner Gangstufe 3 in die Gangstufe 4 werden die beiden Drucksteuerventile 39 und 40 abgeschaltet. Die Reibkupplung A ist weiterhin eingerückt, während anstelle von Reibbremse D Reibkupplung B eingerückt werden soll. Die Abschaltung der beiden Drucksteuerventile 39 und 40 führt dazu, daß über die Leitungen 61 und 68 der Vorsteuerdruck an den Steuerventilen 65, 67 und 70 abgebaut wird. Aus der Systemdruckleitung 34 gelangt über das unter dem Druck der Leitung 50 verschobene Schaltventil 28 Druckmittel in die Leitung 100, sodann über das Schaltventil 30, die Leitung 96 und das unter Federkraft geöffnete Steuerventil 91 in die zur Betätigungseinrichtung 82 der Reibkupplung B führende Leitung 92. Dieser sich in der Leitung 92 aufbauende Druck pflanzt sich über das Schaltventil 47 bis in die Leitung 106 fort, die stirnseitig auf das Abschaltventil 56 wirkt. Somit steuert das Abschaltventil 56 gleichzeitig mit dem Druckanstieg in der Betätigungseinrichtung 82 die Betätigungseinrichtung 84 in ihre ausgerückte Stellung.

Von der Gangstufe 4 in die Gangstufe 5 werden die Reibkupplung A aus- und die Reibbremse D eingerückt. Zu diesem Zweck wird das Magnetventil 42 abgeschaltet und das Magnetventil 43 zugeschaltet. Außerdem baut das Drucksteuerventil 39 wiederum in der Vorsteuerleitung 61 einen Druck auf. Von der Leitung 100 aus baut sich wiederum in der Leitung 96 ein Systemdruck auf, der sich nunmehr über das vom Magnetventil 43 geöffnete Abschaltventil 56 bis in die Leitung 102 fortpflanzen kann. Von der Leitung 102 aus gelangt das Druckmittel über das vom Drucksteuerventil 39 geöffnete Steuerventil 65 in die Leitung 93 und somit zur Betätigungseinrichtung 84 der Reibbremse D. Bei dieser Schaltung wirkt im Gegensatz zum Schaltvorgang von Gangstufe 2 nach Gangstufe 3 der Steuerdruck des ersten Steuersystems 36, daß heißt der Vorsteuerleitung 61 über das Schaltventil 47 ausschließlich auf den Vorsteuerraum 64 des Steuerventils 65, da das zu übertragende Drehmoment bei dieser Schaltung kleiner ist als bei der Schattung von Gangstufe 2 nach 3, bei der ebenfalls die Reibbremse D zugeschaltet wurde. Die Reibkupplung A wird bei diesem Schaltvorgang ausgerückt, da das Magnetventil 43 stirnseitig am Rückwärtsgangsicherungsventil 26 über die Steuerleitung 53 einen Druck aufbaut und damit das Rückwärtsgangsicherungsventil in eine Stellung bewegt, in der dieses eine veränderte Stellung des Steuerventils 88 herbeiführt, derart, daß die Betätigungseinrichtung 88 der Reibkupplung A nur so weit befüllt ist, daß kein Drehmoment übertragen werden kann.

Schließlich erfolgt die Schaltung der Rückwärtsgangstufe ausgehend von der Neutralstellung N des Wählschiebers 32 nach R, wobei nur das Magnetventil 42 betätigt wird. Aus dem Leitungszweig 25d der Hauptleitung gelangt über den Wählschieber 32 Druckmittel mit Systemdruck in die Leitung 33 und von dort aus über das Rückwärtsgungsicherungsventil 26 in die Betätigungseinrichtung 87 der Reibbremse F und über den Federspeicherdämpfer 60 in die Betätigungseinrichtung 83 der Reibkupplung C. Auch bei diesem Anfahrvorgang von N nach R wird der Druckaufbau in den Betätigunseinrichtungen 83 und 87 durch das aufsteuernde Drucksteuerventil 38 geregelt.

Bei dem Ausgestaltungsbeispiel nach Fig. 4 ist ein viertes Drucksteuerventil 107 vorgesehen, das über eine Steuerleitung 108 an die Hauptsteuerleitung 37 angeschlossen ist. Eine druckgeregelte Vorsteuerleitung 109 führt drei zum stirnseitigen Federraum 62 des Abschaltventils 35 und zum federbelasteten Steuerraum 55 des Abschaltventils 56. Somit sind im Vergleich zu der Ausgestaltung nach Fig. 3 anstelle der Vorsteuerleitung 61 und der Steuerleitung 53 die über das Drucksteuerventil 107 beherrschte Vorsteuerleitung 109 angeschlossen. Ein Temperatursensor 110 ermittelt die Schmieröltemperatur im Kraftfahrzeuggetriebe und führt die entsprechenden Werte dem Steuergerät 72 zu. Das Steuergerät 72 beeinflußt die Stellung des Drucksteuerventils 107 und damit den auf die beiden Abschaltventile 35 und 56 wirkenden Vorsteuerdruck. Dadurch kann der Freilaufpunkt bei der Schaltung über die Elektronik in Abhängigkeit vom Viskositätszustand des Schmieröls verändert werden, so daß sich ruckfreie Schaltübergänge ergeben.

### Bezugszeichen

- A: Reibkupplung
- B: Reibkupplung
- C: Reibkupplung
- D: Reibbremse
- E1: Reibbremse
- E2: Reibbremse
- F: Reibbremse
- 1: Eingangswelle
- 2: Antriebswelle
- 3: Antriebswelle
- 4: Antriebswelle
- 5: Planetensatz
- 6: Planetensatz
- 7: Planetensatz
- 8: Ausgangswelle
- 9: Sonnenrad von 7
- 10: Planetenräder von 7
- 11: Steg von 7
- 12: Hohlrad von 7
- 13: Freilaufkupplung
- 14: Getriebegehäuse
- 15: äußeres Zentralrad von 5
- 16: Planetenträger von 6
- 17: Planetenräder von 6
- 18: inneres Zentralrad von 6
- 19: Hohlrad von 6
- 20: Sonnenrad von 5
- 21: Planetenräder von 5
- 22: Stegwelle von 5
- 23: Freilaufkupplung
- 24: Hydraulikpumpe
- 25: Hauptleitung
- 25a: Leitungszweig nach 26
- 25b: Leitungszweig nach 27
- 25c: Leitungszweig nach 28
- 25d: Leitungszweig nach 29
- 25e: Leitungszweig nach 30
- 26: Rückwärtsgangsicherungsventil
- 27: Druckreduzierventil
- 28: erstes Schaltventil
- 29: Hauptdruckventil
- 30: Schaltventil
- 31: zweites Druckreduzierventil
- 32: Wählschieber
- 33: Leitung zwischen 32 und 26
- 34: Leitung zwischen 32, 28 und 35
- 35: Abschaltventil
- 36: erstes Steuersystem
- 37: Hauptsteuerleitung
- 37a: Steuerzweig für 38
- 37b: Steuerzweig für 39
- 37c: Steuerzweig für 40
- 38: erstes Drucksteuerventil
- 39: zweites Drucksteuerventil
- 40: drittes Drucksteuerventil
- 41: erstes Magnetventil
- 42: zweites Magnetventil
- 43: drittes Magnetventil
- 44: zweites Steuersystem
- 45: Steuerleitung von 41 an 28, 47 und 30
- 46: Vorsteuerraum von 47
- 47: Schattventil
- 48: Vorsteuerraum von 28
- 49: Vorsteuerraum von 30
- 50: Steuerleitung von 42 nach 47 und 28
- 51: ferderbelastete Stirnseite von 28
- 52: ringförmiger Vorsteuerraum von 47
- 53: Steuerleitung von 43 nach 26 und 56
- 54: stirnseitiger Vorsteuerraum von 26
- 55: federbelasteter Steuerraum von 56
- 56: Abschaltventit
- 57: Vorsteuerleitung von 38
- 58: federbelastete Stirnseite von 29
- 59: Federspeicherdämpfer
- 60: Federspeicherdämpfer
- 61: Vorsteuerleitung von 39
- 62: stirnseitiger Federraum von 35
- 63: Federspeicherdämpfer
- 64: Vorsteuerraum von 65
- 64a: ringförmige Kolbenfläche von 65
- 65: Steuerventil für D
- 66: Stirnseitiger Steuerraum von 67
- 67: Steuerventil für E2
- 68: Vorsteuerleitung von 40
- 69: Vorsteuerraum von 70
- 70: Steuerventil für F
- 71: Federspeicherdämpfer
- 72: Steuergerät
- 73: Schaltbeeinflussung
- 74: Motormomentsensor
- 75: Drosselklappensensor
- 76: Drehzahlsensor N_{Mot}
- 77: Drehzahlsensor N_{Getriebe}
- 78: Fahrprogrammbeeinflussung
- 79: Fehlerdetektor
- 80: Uberwachungseinrichtung
- 81: Betätigungseinrichtung für A
- 82: Betätigungseinrichtung für B
- 83: Betätigungseinrichtung für C
- 84: Betätigungseinrichtung für D
- 85: Betätigungseinrichtung für E1
- 86: Betätigungseinrichtung für E2
- 87: Betätigungseinrichtung für F
- 88: Steuerventil für A
- 88a: federbetastete Stirnseite von 88
- 89: Systemdruckleitung
- 90: Leitung zwischen 26 und 88
- 91: Steuerventil für B
- 92: Leitung zwischen 91, 82 und 47
- 93: Leitung zwischen 47, 65 und 84
- 94: Steuerventil für E1
- 95: Vorsteuerraum von 94
- 96: Leitung zwischen 94, 30, 91 und 56
- 97: Federraum von 94
- 98: Leitung zwischen 94, 67 und 30
- 99: Leitung zwischen 94 und 67
- 100: Leitung zwischen 94, 30 und 28
- 101: Leitung zwischen 65 und 47
- 102: Leitung zwischen 65 und 56
- 103: Leitung zwischen 30 und 91
- 104: Leitung zwischen 28 und 70
- 105: Leitung zwischen 26 und 60
- 106: Leitung zwischen 47 und 56
- 107: viertes Drucksteuerventil
- 108: Steuerleitung
- 109: Vorsteuerleitung
- 110: Temperatursensor

## Patentansprüche

1. Elektronisch-hydraulische Steuereinrichtung eines automatisch schaltender- Kraftfahrzeuggetriebes mit zur Schaltung einzelner Gangstufen dienenden hydraulisch ein-und ausrückbaren Reibkupplungen bzw. -bresem (A, B, D, E1, E2 und F), deren Betätigungseinrichtungen (81, 82, 84, 85, 86 und 87) jeweils ein Steuerventil (88, 91, 65, 67, 94 und 70) zugeordnet ist, mit einem das Druckniveau in einem Hauptdrucksystem (Leitungen 25 und 34) regelnden Hauptdruckventil (29) und mit einem als Mikroprozessor ausgebildeten Steuergerät (72), mittels welchem in Abhängigkeit von Betriebsparametern des Kraftfahrzeuggetriebes und eines Antriebsmotors sowie einer Einrichtung zur Schalt- und/oder Fahrprogrammbeeinflussung (73, 78) die Betätigungseinrichtung (81 bis 87) beherrschende elektrisch betätigte Magnetventile (41, 42, 43) und Drucksteuerventile (38, 39, 40) verstellbar sind, dadurch **gekennzeichnet**, daß die Drucksteuerventile (38, 39, 40) in einem gegenüber dem Hauptdrucksystem (Leitungen 25 und 34) druckreduzierten ersten Steuersystem (36) angeordnet sind, über welches sie vorsteuernd auf die Steuerventile (88, 91, 65, 67, 70 und 94) und das Hauptdruckventil (29) wirken, und daß die Magnetventile (41, 42, 43) in einem ebenfalls gegenüber dem Hauptdrucksystem (Leitungen 25 und 34) druckreduzierten zweiten Steuersystem (44) angeordnet sind, wobei die Magnetventile (41, 42, 43) vorsteuernd auf Schaltventile (28, 30, 47), die den Druckmittelzulauf vom Hauptdrucksystem (Leitungen 25 und 34) zu den Steuerventilen (88, 91, 65, 67, 70 und 94) steuern, und ein Rückwärtsgangsicherungsventil (26) wirken.

2. Elektronisch-hydraulische Steuereinrichtung nach Anspruch 1, dadurch **gekennzeichnet**, daß ein erstes einen Ablauf (Steuerzweig 37a) stromproportional aufsteuerndes Drucksteuerventil (38) in einer Steuerleitung (57) des ersten Steuersystems (36) angeordnet ist, über welches das Hauptdruckventil (29) an seiner federbelasteten Stirnseite (58) derart motormomentabhängig druckentlastbar ist, daß mittels des Hauptdruckventils (29) für jeden Betriebszustand der erforderliche Systemdruck des Hauptdrucksystems (Leitungen 25 und 34) einstellbar ist, und daß während eines Anfahrvorgangs des Kraftfahrzeuggetriebes (von N nach G1 oder von N nach R) in den Betätigungseinrichtungen (81, 83, 87) der in den jeweiligen Gangstufen einzurückenden Reibkupplungen bzw. -bremsen (A bis E1) ein geregelter Druckaufbau erfolgt.

3. Elektronisch-hydraulische Steuereinrichtung nach Anspruch 1, dadurch **gekennzeichnet**, daß zumindest ein zweites und ein drittes Drucksteuerventil (39 und 40) jeweils einen Ablauf (Steuerzweige 37b und 37c) einer mit ihnen verbundenen Vorsteuerleitung (61, 68) des ersten Steuersystems während eines Betätigungsvorgangs stromproportional zusteuern, wobei Kolbenschieber der Steuerventile (65, 67, 70, 91) jeweils an ihrer einer Feder gegenüberliegenden Stirnseite (64, 66) unter dem Druck der jeweiligen Vorsteuerleitung (61, 68) verschiebbar sind.

4. Elektronisch-hydraulische Steuereinrichtung nach Anspruch 3, dadurch **gekennzeichnet**, daß die Schaltventile (28, 30, 47) in den Vorsteuerleitungen (61 und 68) angeordnet sind, über welche Schaltventile die jeweilige Vorsteuerleitung (61 bzw. 68) in einen drucklosen Zustand schaltbar ist.

5. Elektronisch-hydraulische Steuereinrichtung mit zumindest einem Abschaltventil (35, 56), das bei einem Wechsel der Gangstufen den Abbau des Betätigungsdruckes an der Betätigungseinrichtung (81 bis 86) der auszurückenden Reibkupplung bzw. -bremse (A bis E2) steuert, nach Anspruch 1, dadurch **gekennzeichnet**, daß das Abschaltventil (35, 56), dessen Kolbenschieber an seiner einen Stirnfläche mit Hauptdruck der Betätigungseinrichtung der einzurückenden Reibungskupplung bzw. -bremse beaufschlagt wird, an seiner gegenüberliegenden Stirnseite (55, 62) derart aus einer Vorsteuerleitung (61, 53) beaufschlagbar ist, daß es geregelt in eine den Druckmittelabfluß aus der Betätigungseinrichtung (84, 88) der auszurückenden Reibkupplung bzw. -bremse überführbar ist.

6. Elektronisch-hydraulische Steuereinrichtung nach Anspruch 5, dadurch **gekennzeichnet**, daß ein weiteres die Abschaltventile (35, 56) regelndes elektrisches Drucksteuerventil (107) in Abhängigkeit von der Schmieröltemperatur im Kraftfahrzeuggetriebe über einen Temperatursensor (110) regelbar ist.

7. Elektronisch-hydraulische Steuereinrichtung nach Anspruch 2, dadurch **gekennzeichnet**, daß zumindest eines der Steuerventile (65) entsprechend dem jeweils über die zugeordnete Reibkupplung bzw. -bremse (D) zu übertragenden Drehmoment unterschiedliche vom Vorsteuerdruck beaufschlagbare Stirnflächen (64 und 64A) aufweist.

8. Elektronisch-hydraulische Steuereinrichtung nach Anspruch 7, dadurch **gekennzeichnet**, daß die Steuercharakteristik eines Steuerventils (65), das jeweils in unteren und oberen Gangstufen betätigbar ist, bezogen auf das an der jeweiligen Reibkupplung bzw. -bremse (D) zu übertragende Drehmoment veränderbar ist durch eine Beaufschlagung des Steuerventils (65) in der unteren Gangstufe an dessen kreisförmiger Stirnfläche (64) und einer kreisringförmigen Betätigungsfläche (64a) und in der oberen Gangstufe nur an der kreisförmigen Stirnfläche (64).

9. Elektronisch-hydraulische Steuereinrichtung nach Anspruch 1, dadurch **gekennzeichnet**, daß innerhalb des ersten Steuersystems (36) jedem Drucksteuerventil (38, 39, 40) ein hydraulischer Federspeicherdämpfer (59, 60, 63 und 71) zur Reduzierung der Druckschwingungen zugeordnet ist.

10. Elektronisch-hydraulische Steuereinrichtung nach Anspruch 4, dadurch **gekennzeichnet**, daß zur Schaffung eines Sicherheitszustandes im stromlosen Zustand der Steuereinrichtung die für die entsprechende Gangstufe (G4) zu betätigenden Schaltventile (28) und die zu betätigenden Steuerventile (65, 67, 70, 91) jeweils durch Federkraft in eine Position verschoben werden, in der sie den entsprechenden Betätigungseinrichtungen (82 und 84) Druckmittel aus dem Hauptdrucksystem (25, 34) zuführen.

11. Elektronisch-hydraulische Steuereinrichtung nach Anspruch 4, dadurch **gekennzeichnet**, daß an das Steuergerät (72) eine Einrichtung zur Fehlerüberwachung eines Zünd- bzw. Einspritzsystems des Antriebsmotors und/oder eines Antiblockiersystems des Kraftfahrzeugs (79, 80) angeschlossen ist, die dem Steuergerät (72) Fehler im Zünd- bzw . Einspritzsystem und/oder einen Betrieb des Antiblockiersystems signalisieren, daß beim Auftreten des Fehlersignals und der weiteren Parameter Fahrzeuggeschwindigkeit v = 0 oder v kleiner als ein unterer Grenzwert und/oder des Signals des Antiblockiersystems zumindest ein Rückwärtsgangsicherungs ventil (26) mittels des zugeordneten Magnetventils (43) oder eines der Drucksteuerventile (39 oder 40) derart verstellt wird, daß sich das Kraftfahrzeuggetriebe im Leerlauf befindet.

## Claims

1. Electronic-hydraulic control device for an automatic motor vehicle transmission system with hydraulic friction clutches or friction brakes (A, B, D, E1, E2 and F) which can be engaged and disengaged for shifting between individual gears and with whose actuating devices (81, 82, 84, 85, 86 and 87) a control valve (88, 91, 65, 67, 94 and 70) is associated in each case, with a main pressure valve (29) controlling the pressure level in a main pressure system (lines 25 and 34) and with a control device (72) constructed as a microprocessor, by means of which, as a function of operating parameters of the motor vehicle transmission and a drive motor as well as a device (73, 78) influencing the gear change and/or speed program, electrically operated magnetic valves (41, 42, 43) and pressure control valves (38, 39, 40) controlling the actuating device (81 to 87) can be adjusted, characterised in that the pressure control valves (38, 39, 40) are arranged in a first control system (36) whose pressure is reduced in relation to the main pressure system (lines 25 and 34) and by means of which these pressure control valves act as pilot valves acting on the control valves (88, 91, 65, 67, 70 and 94) and on the main pressure valve (29), and the magnet valves (41, 42, 43) are arranged in a second control system (44) whose pressure is also reduced in relation to the main pressure system (lines 25 and 34), the magnetic valves (41, 42, 43) acting as pilot valves acting on shift valves (28, 30, 47), which control the flow of pressure medium from the main pressure system (lines 25 and 34) to the control valves (88, 91, 65, 67, 70 and 94), and acting on a non-return valve (26).

2. Electronic-hydraulic control device according to claim 1, characterised in that a first pressure control valve (38), which controls an outflow (control branch 37a) proportional to the flow, is arranged in a control line (57) of the first control system (36), by means of which the main pressure valve (29) can be relieved of pressure on its spring-loaded end face (58) as a function of the engine torque in such a manner that the required system pressure of the main pressure system (lines 25 and 34) can be adjusted for each operating mode by means of the main pressure valve (29), and during a starting process of the motor vehicle transmission (from N to G1 or from N to R) a controlled pressure build-up takes place in the actuating devices (81, 83, 87) of the friction clutches or friction brakes (A to E1) to be engaged in the respective gears.

3. Electronic-hydraulic control device according to claim 1, characterised in that, during an actuation procedure, at least one second and one third pressure control valve (39 and 40) each control an outflow (control branches 37b and 37c) of a pilot control line (61, 68) of the first control system connected with said pressure control valves proportional to the flow, plungers of the control valves (65, 67, 70, 91) being displaceable in each case at their end face (64, 66) opposite a spring under the pressure of the respective pilot line (61, 68).

4. Electronic-hydraulic control device according to claim 3, characterised in that the shift valves (28, 30, 47) are arranged in the pilot lines (61 and 68), the respective pilot line (61 or 68) being switchable into a pressure-free state by means of said shift valves.

5. Electronic-hydraulic control device with at least one cut-off valve (35, 56), which during a gear change controls the reduction of the operating pressure acting upon the actuating device (81 to 86) of the friction clutch or friction brake (A to E2) to be disengaged, according to claim 1, characterised in that the cut-off valve (35, 56), whose plunger is acted upon at one end face by the main pressure of the actuating device of the friction clutch or friction brake to be engaged, can be acted upon at its opposite end face (55, 62) by a pilot control line (61, 53) in such a manner that it can be transferred in a controlled manner into the pressure medium outflow from the actuating device (84, 88) of the friction clutch or friction brake to be disengaged.

6. Electronic-hydraulic control device according to claim 5, characterised in that a further electrical pressure control valve (107) controlling the cut-off valve (35, 56) can be controlled via a temperature sensor (110) as a function of the lubricating oil temperature in the motor vehicle transmission.

7. Electronic-hydraulic control device according to claim 2, characterised in that at least one of the control valves (65) comprises end faces (64 and 64A) which can be acted upon independently of the pilot pressure as a function of the torque to be transmitted via the respective associated friction clutch or friction brake (D).

8. Electronic-hydraulic control device according to claim 7, characterised in that the control characteristic of a control valve (65), which can be actuated in the lower and upper gears respectively, is variable in relation to the torque to be transmitted to the respective friction clutch or friction brake (D) by an actuation of the control valve (65) on its circular end face (64) and a circular ring-shaped actuating surface (64a) in the lower gears and solely on its circular end face (64) in the upper gears.

9. Electronic-hydraulic control device according to claim 1, characterised in that a hydraulic spring-loaded damper (59, 60, 63 and 71) for reducing the pressure vibrations is associated with each pressure control valve (38, 39, 40) in the first control system (36).

10. Electronic-hydraulic control device according to claim 4, characterised in that, in order to create a safety condition in the current-free state of the control device, the shift valves (28) and the control valves (65, 67, 70, 91) to be actuated for the corresponding gear (G4) are each displaced by spring force into a position in which they supply pressure medium from the main pressure system (25, 34) to the corresponding actuating devices (82 and 84).

11. Electronic-hydraulic control device according to claim 4, characterised in that a device for monitoring errors in an ignition or injection system of the drive motor and/or in an anti-locking system of the motor vehicle (79, 80) is connected to the control device (72) and informs the control device (72) of errors in the ignition or injection system and/or of an operation of the anti-locking system, in that with the occurrence of the error signal and the further parameters of vehicle velocity v = 0 or v less than a lower threshold and/or the signal of the anti-locking system, at least one non-return valve (26) is adjusted by means of the associated magnetic valve (43) or one of the pressure control valves (39 or 40) in such a manner that the motor vehicle transmission idles.

## Revendications

1. Dispositif électronique-hydraulique de commande d'une transmission à commutation automatique pour véhicules automobiles comportant, pour la commutation entre différents rapports, des embrayages ou freins à friction (A, B, D, E1, E2 et F) à enclenchement et déclenchement hydraulique dont les organes d'actionnement (81, 82, 84, 85, 86 et 87 ) sont associés chacun à un distributeur (88, 91, 65, 67, 94 et 70), une soupape principale (29) qui règle le niveau de pression dans un système hydraulique principal (conduits 25 et 34), et un appareil de commande (72) constitué par un microprocesseur au moyen duquel des électrovannes (41, 42, 43) et des soupapes de commande de pression (38, 39, 40), commandées électriquement et commandant lesdits organes d'actionnement (81 à 87) sont commutées en fonction de paramètres de fonctionnement de la transmission et d'un moteur de propulsion ainsi que d'un dispositif pour influencer un programme de changement de vitesses ou de marche (73, 78), **caractérisé** en ce que les soupapes de commande de pression (38, 39, 40) sont placées dans un premier système de commande (36), à pression réduite par rapport au système principal (conduits 25 et 34), par lequel elles pilotent les distributeurs (88, 91, 65, 67, 70 et 94) et la soupape principale (29), et en ce que les électrovannes (41, 42, 43) sont placées dans un second système de commande (44), également à pression réduite par rapport au système principal (conduits 25 et 34), par lequel les électrovannes (41, 42, 43) pilotent des soupapes de commutation (28, 30, 47) qui commandent le passage du fluide hydraulique du système principal (conduits 25 et 34) aux distributeurs (88, 91, 65, 67, 70 et 94), et une soupape de sécurité de marche arrière (26).

2. Dispositif selon la revendication 1, **caractérisé** en ce qu'une première soupape de commande de pression (38), commandant une décharge (branche 37a) proportionnellement au courant, est placée sur un conduit de commande (57) du premier système de commande (36) et permet de décharger le côté frontal (58) chargé par un ressort de la soupape principale (29) en fonction du couple moteur de telle manière que la pression nécessaire du système principal (conduits 25 et 34) soit ajustable au moyen de la soupape principale (29), et en ce que, pendant une phase de démarrage de la transmission (de N à G1 ou de N à R), une montée réglée de la pression est produite dans les organes d'actionnement (81, 83, 87) des embrayages ou freins (A à E1) à enclencher dans les rapports respectifs.

3. Dispositif selon la revendication 1, **caractérisé** en ce qu'au moins une deuxième et une troisième soupape de commande de pression (39 et 40 ) commandent proportionnellement au courant chacune une décharge (branches 37b et 37c) d'un conduit de pilotage (61, 68) du premier système de commande pendant une phase d'actionnement où des tiroirs à pistons des distributeurs (65, 67, 70, 91) sont déplacés par la pression des conduits de pilotage respectifs (61, 68) sur leur côté frontal (64, 66) situé à l'opposé d'un ressort.

4. Dispositif selon la revendication 3, **caractérisé** en ce que les soupapes de commutation (28, 30, 47) au moyen desquelles chaque conduit de pilotage (61, 68) peut être mis dans un état sans pression sont placées sur les conduits de pilotage (61 et 68).

5. Dispositif électronique-hydraulique de commande comportant au moins une soupape de déclenchement (35, 56) qui commande la baisse de la pression d'actionnement sur l'organe d'actionnement (81 à 86) de l'embrayage ou frein (A à E2) à déclencher lors d'un changement de rapport, selon la revendication 1, **caractérisé** en ce que la soupape de déclenchement (35, 56), dont le tiroir à piston est sollicité sur son premier côté frontal par la pression principale de l'organe d'actionnement de l'embrayage ou frein à enclencher, peut être sollicitée sur son côté frontal opposé (55, 62) à partir d'un conduit de pilotage (61, 53) de façon à être déplacée de manière réglée pour commander la sortie du fluide de l'organe d'actionnement (84, 88) de l'embrayage ou frein à déclencher.

6. Dispositif selon la revendication 5, **caractérisé** en ce qu'une autre soupape électrique de commande de pression (107), qui régule les soupapes de déclenchement (35, 56), est réglable en fonction de la température du lubrifiant dans la transmission au moyen d'un capteur de température (110).

7. Dispositif selon la revendication 2, **caractérisé** en ce qu'au moins un des distributeurs (65) comporte des surfaces frontales différentes (64 et 64A) susceptibles d'être sollicitées par la pression de pilotage, selon le couple à transmettre par l'embrayage ou frein (D) qui lui est associé.

8. Dispositif selon la revendication 7, **caractérisé** en ce que la caractéristique de commande d'un distributeur (65), susceptible d'être actionné dans un rapport inférieur et dans un rapport supérieur, est modifiable par rapport au couple à transmettre dans l'embrayage ou frein correspondant (D), par sollicitation du distributeur (65) sur sa surface frontale circulaire (64) et sur une surface active annulaire (64a) dans le rapport inférieur, et seulement sur la surface frontale circulaire (64) dans le rapport supérieur.

9. Dispositif selon la revendication 1, **caractérisé** en ce que, dans le premier système de commande (36), un amortisseur hydraulique à ressort (59, 60, 63 et 71) est associé à chaque soupape de commande de pression (38, 39, 40) afin de réduire les oscillations de pression.

10. Dispositif selon la revendication 4, **caractérisé** en ce que, pour établir un état de sécurité quand le dispositif de commande est privé de courant, les soupapes de commutation (28) à actionner pour le rapport correspondant (G4) et les distributeurs à actionner (65, 67, 70, 91 ) sont mis par la force d'un ressort dans une position où ils transmettent du fluide du système principal (25, 34) aux organes d'actionnement correspondants (82 et 84).

11. Dispositif selon la revendication 4, **caractérisé** en ce que l'appareil de commande (72) est raccordé à une unité de surveillance d'erreurs d'un système d'allumage et d'injection du moteur de propulsion et/ou d'un système antiblocage du véhicule (79, 80), qui signale à l'appareil de commande (72) des erreurs dans le système d'allumage et d'injection ou un fonctionnement du système antiblocage, et en ce que, dans le cas où le signal d'erreur est présent et où en outre le paramètre de vitesse v du véhicule est égal à zéro ou plus petit qu'une limite inférieure et/ou si le signal du système antiblocage est présent, au moins une soupape de sécurité de marche arrière (26) est actionnée au moyen de l'électrovanne correspondante (43) ou d'une des soupapes de commande de pression (39 ou 40) de manière que la transmission du véhicule tourne à vide.
